# EUROPÄISCHE PATENTSCHRIFT

(11) **EP 2 969 243 B1**
(45) Veröffentlichungstag und Bekanntmachung des Hinweises auf die Patenterteilung: **26.04.2023**
(21) Anmeldenummer: 14724630.0
(22) Anmeldetag: 11.03.2014
(51) Int. Cl.: B01D 46/00, B05B 15/40, B05B 14/43, B01D 45/08, B05B 14/435

(54) **VERFAHREN ZUM BETREIBEN EINER OBERFLÄCHENBEHANDLUNGSANLAGE, SATZ VON FILTERMODULEN UND OBERFLÄCHENBEHANDLUNGSANLAGE**
METHOD FOR OPERATING A SURFACE TREATMENT INSTALLATION, SET OF FILTER MODULES AND SURFACE TREATMENT INSTALLATION
PROCÉDÉ DE CONDUITE D'UNE INSTALLATION DE TRAITEMENT DE SURFACE, ENSEMBLE DE MODULES FILTRANTS ET INSTALLATION DE TRAITEMENT DE SURFACE

(30) Priorität: 11.03.2013 DE 102013004082
(43) Veröffentlichungstag der Anmeldung: 20.01.2016
(73) Patentinhaber: Eisenmann GmbH, 71032 Böblingen (DE)
(72) Erfinder: SCHMEINCK, Nils, 70193 Stuttgart (DE); SCHULZE, Herbert, 71134 Aidlingen (DE); RÖCKLE, Jürgen, 71106 Magstadt (DE)
(74) Vertreter: Ostertag & Partner Patentanwälte mbB
(86) Internationale Anmeldenummer: PCT/EP2014/000640
(87) Internationale Veröffentlichungsnummer: WO 2014/139669

(56) Entgegenhaltungen:
- WO-A2-03/084638
- DE-A1-102011 108 631
- DE-A1-102011 117 667
- DE-U1- 29 920 041
- US-A- 4 401 445

## Beschreibung

Die Erfindung betrifft ein Verfahren zum Betreiben einer Oberflächenbehandlungsanlage, bei welchem Overspray, der in einer Beschichtungskabine entsteht, von einem Luftstrom aufgenommen und zu einem oder mehreren Einweg-Filtermodulen geführt wird, in denen Overspray abgeschieden wird, wobei ein Einweg-Filtermodul nach Erreichen einer Grenzbeladung mit Overspray gegen ein leeres Einweg-Filtermodul ausgetauscht wird.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray, Overspraypartikel oder Oversprayfeststoffe immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen in bekannter Weise bevorzugt Nassabscheidesysteme einerseits oder elektrostatisch arbeitende Trockenabscheider andererseits zum Einsatz. Bei bekannten Nassabscheidern wird verhältnismäßig viel Energie zur Umwälzung der erforderlichen, recht großen Wassermengen benötigt. Die Aufbereitung des Spülwassers ist durch den hohen Einsatz an Lack bindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat. Bei elektrostatisch arbeitenden Trockenabscheidern muss der Lack-Overspray kontinuierlich von den Abscheideflächen entfernt werden, was meist mit baulich recht aufwendigen Maßnahmen verbunden ist und entsprechend störanfällig sein kann. Zudem ist der Energieaufwand bei solchen Abscheidern verhältnismäßig hoch.

Als Alternative zu diesen Abscheidesystemen ist beispielsweise aus der DE 10 2011 108 631 A1 bekannt, mit austauschbaren Einweg-Filtermodulen zu arbeiten, die nach Erreichen einer Grenzbeladung mit Overspray gegen unbeladene Filtermodule ausgetauscht und entsorgt oder gegebenenfalls recycled werden. Die Aufbereitung und/oder Entsorgung von derartigen Filtermodulen kann energetisch und auch im Hinblick auf die erforderlichen Ressourcen verträglicher sein als der Aufwand bei einem Nassabscheider oder einer elektrostatisch arbeitenden Abscheidevorrichtung.

In einer Oberflächenbehandlungsanlage können abhängig von der Art des Beschichtungsmaterials verschiedene Arten von Overspray mit unterschiedlichen Eigenschaften entstehen und es hat sich gezeigt, dass die Filterwirkung und die Aufnahmekapazität von Filtermodulen derselben Bauart für verschiedene Oversprayarten unterschiedlich und nicht immer optimal ist. Beim Lackieren von Fahrzeugkarosserien kommen beispielsweise Lösemittel-Lacke, wasserverdünnbare Lacke, 2-Komponenten- und/oder Mehrkomponenten-Lacke zum Einsatz, die verschiedene Eigenschaften haben, die sich entsprechend auch in dem jeweils entstehenden Overspray finden.

Es ist Aufgabe der Erfindung, einen Weg vorzuschlagen, mit dem eine Oberflächenbehandlungsanlage der eingangs genannten Art im Hinblick auf die Abscheidung von Overspray effektiver betrieben werden kann.

Diese Aufgabe wird bei einem Verfahren der eingangs genannten Art dadurch gelöst, dass das eine oder die mehreren Einweg-Filtermodule (40) abhängig von der Art und den Eigenschaften des Oversprays aus einem Satz (62) von unterschiedlichen Einweg-Filtermodulen (64.X) ausgewählt werden, wobei ein Satz (62) von unterschiedlichen Einweg-Filtermodulen (64.X) verwendet wird, der
a) verschiedene Filtermodule (64.X) umfasst, die als austauschbare Einweg-Baueinheiten mit einem Modulgehäuse (66) und einer Filtereinheit (78) ausgebildet sind und durch welche mit Overspray beladene Kabinenluft leitbar ist;
   und bei dem
b) die Modulgehäuse (66) der verschiedenen Filtermodule (64.X) anschlussgleiche Moduleinlässe (70, 90) haben;
c) die Modulgehäuse (66) der verschiedenen Filtermodule (64.X) anschlussgleiche Modulauslässe (72, 88) haben;
d) zumindest die Filtereinheiten (78) von zwei verschiedenen Filtermodulen (64.X) unterschiedlich ausgebildet sind.

Es wird somit ein Satz von unterschiedlichen Einweg-Filtermodulen zur Verfügung gestellt, bei dem unterschiedliche Filtermodule jeweils im Hinblick auf das Abscheiden einer bestimmten Art von Overspray optimiert sind. So kann abhängig von dem Applikationsprozess, der in der Beschichtungskabine durchgeführt wird oder werden soll, die Reinigung des mit Overspray beladenen Luftstroms aus der Beschichtungskabine vorbereitet bzw. optimiert werden.

Dabei ist es insbesondere günstig, wenn die rheologischen Eigenschaften des Overspray, d.h. das Fließverhalten des Oversprays, und/oder die Partikelgrößenverteilung des Oversprays bei der Auswahl des Einweg-Filtermoduls berücksichtigt werden und ein entsprechend hierauf abgestimmtes Filtermodul ausgewählt wird.

Der angesprochene Satz von Filtermodulen ist angepasst an die Verwendung in einer Oberflächenbehandlungsanlage, in welcher Overspray, der in einer Beschichtungskabine entsteht, von einem Luftstrom aufgenommen und zu einem oder mehreren Einweg-Filtermodulen geführt wird, in denen Overspray abgeschieden wird, wobei ein Einweg-Filtermodul nach Erreichen einer Grenzbeladung mit Overspray gegen ein leeres Einweg-Filtermodul ausgetauscht wird. Erfindungsgemäß ist der Satz so ausgebildet, dass dieser
a) verschiedene Filtermodule umfasst, die als austauschbare Einweg-Baueinheiten mit einem Modulgehäuse und einer Filtereinheit ausgebildet sind und durch welche mit Overspray beladene Kabinenluft leitbar ist;
   und
b) die Modulgehäuse der verschiedenen Filtermodule anschlussgleiche Moduleinlässe haben;
c) die Modulgehäuse der verschiedenen Filtermodule anschlussgleiche Modulauslässe haben;
d) zumindest die Filtereinheiten von zwei verschiedenen Filtermodulen unterschiedlich ausgebildet sind.

Durch die anschlussgleichen Moduleinlässe und Modulauslässe können verschiedene Filtermodule problemlos in ein und derselben Anlage bzw. Beschichtungskabine verwendet werden.

Verschiedene Filtermodule sind hierdurch zueinander und zu der Beschichtungskabine kompatibel, in der sie eingesetzt werden sollen. Dabei können die Geometrien der Modulgehäuse verschiedener Filtermodule des Satzes oder der Strömungsweg der Kabinenluft durch diese hindurch stark unterschiedlich sein.

Es ist günstig, wenn der Satz wenigstens ein Filtermodul umfasst, welches als Abscheidefilter ausgebildet ist. Als Abscheidefilter sollen Filter verstandenwerden, bei denen die Kabinenluft ein Filtermedium durchströmt, an dem sich Overspray abscheidet, wodurch Overspray aus der Kabinenluft herausgefiltert wird.

Es ist außerdem von Vorteil, wenn der Satz wenigstens ein Filtermodul umfasst, welches als Trägheitsfilter ausgebildet ist.

Für manche Arten von Overspray kann es günstig sein, wenn der Satz wenigstens ein Filtermodul umfasst, welches als Kombinationsfilter mit einem Trägheitsteil und einem Abscheideteil ausgebildet ist. In diesem Fall werden also die Eigenschaften eines Trägheitsfilters mit den Eigenschaften eines Abscheidefilters kombiniert.

Eine gute Filterwirkung kann erreicht werden, wenn der Trägheitsfilter und/oder der Trägheitsteil eines jeweiligen Filtermoduls als Zyklon ausgebildet ist.

Auch ist es von Vorteil, wenn der Satz wenigstens ein Filtermodul mit einer Vielzahl von Filterelementen umfasst, die derart angeordnet sind, dass zwischen den Filterelementen ein Strömungslabyrinth ausgebildet ist.

Der Satz umfasst außerdem vorzugsweise wenigstens ein Filtermodul, bei welchem als Filterelemente Filterlamellen, Filterhohlröhren, Filterstäbe, Fachstrukturen oder Kammerstrukturen vorhanden sind.

Insbesondere können die Filterelemente als Filterlamellen mit einem bogenförmigen oder V-förmigen Querschnitt ausgebildet sein.

Besonders effektiv kann der Satz von Filtermodulen genutzt werden, wenn dieser wenigstens ein Filtermodul umfasst, bei dem mehrere Filterstufen vorhanden sind, die in Strömungsrichtung der Kabinenluft aufeinander folgen.

Die oben angegebene Aufgabe wird bei einer Oberflächenbehandlungsanlage der eingangs genannten Art folglich dadurch gelöst, dass
c) die Abscheidevorrichtung einen Satz von derartigen Filtermodulen umfasst.

Nachfolgend werden Ausführungsbeispiele der Erfindung anhand der Zeichnungen näher erläutert. In diesen zeigen:
- Figur 1: eine Lackierkabine mit einer Abscheidevorrichtung für Overspray gemäß einem ersten Ausführungsbeispiel in einer Vorderansicht, bei welcher Kabinenluft über eine Luftleiteinrichtung zu Filtermodulen geleitet wird;
- Figur 2: eine perspektivische Ansicht eines Modulgehäuses eines Filtermoduls aus einem Satz von Filtermodulen mit einem Moduleinlass und einem Modulauslass und mit einer in dem Modulgehäuse untergebrachten Filtereinheit, wobei eine Filterstruktur der Filtereinheit nicht gezeigt ist;
- Figur 3: eine perspektivische Ansicht eines Filtermoduls mit einer Filterstruktur einer ersten Bauart;
- Figur 4: eine perspektivische Ansicht eines Filtermoduls mit einer Filterstruktur einer zweiten Bauart;
- Figur 5: eine perspektivische Ansicht eines Filtermoduls mit einer Filterstruktur einer dritten Bauart;
- Figur 6: eine Ansicht von Oben auf ein Filtermodul mit einer Filterstruktur einer vierten Bauart;
- Figur 7: eine perspektivische Ansicht eines Filtermoduls mit einer Filterstruktur einer fünften Bauart;
- Figur 8: eine perspektivische Ansicht eines Filtermoduls mit einer Filterstruktur einer sechsten Bauart;
- Figur 9: eine Ansicht von oben auf das Filtermodul nach Figur 8;
- Figur 10: eine perspektivische Ansicht eines Filtermoduls mit einer Filterstruktur einer siebten Bauart;
- Figur 11: eine Ansicht von oben auf das Filtermodul nach Figur 10;
- Figur 12: eine Seitenansicht eines Filtermoduls mit teilweise weggebrochenem Filtergehäuse mit einer Filterstruktur einer achten Bauart, bei welchem außerdem gesammelter Overspray im Filtermodul behandelt werden kann;
- Figur 13: eine der Figur 12 entsprechende Seitenansicht zu Veranschaulichung der Behandlung des Oversprays.

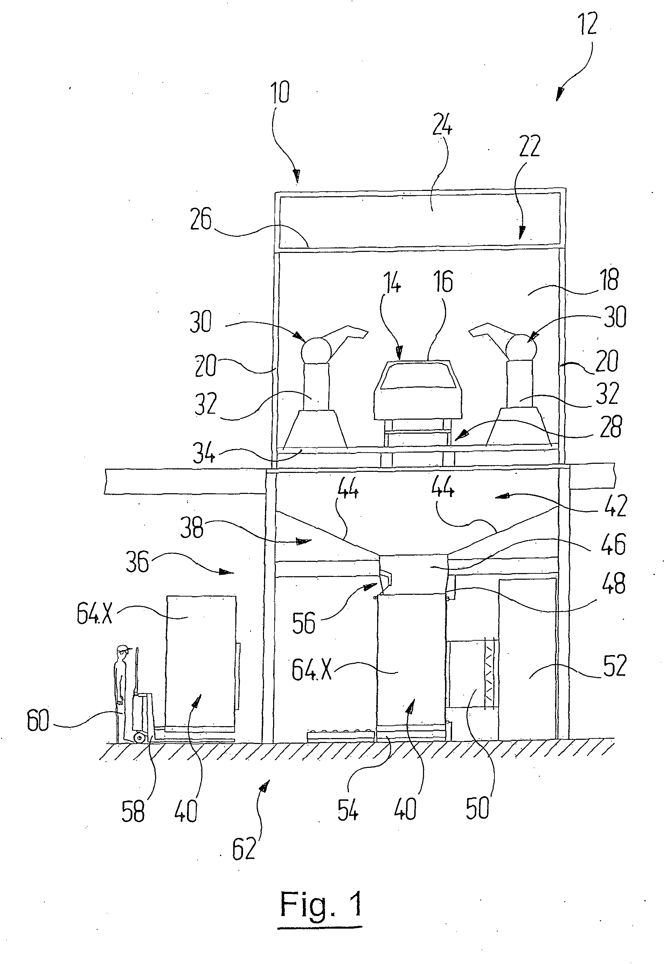

Figur 1 zeigt eine Beschichtungskabine 10 einer insgesamt mit 12 bezeichneten Oberflächenbehandlungsanlage, in welcher Gegenstände 14 lackiert werden. Als Beispiel für zu lackierende Gegenstände 14 sind Fahrzeugkarosserien 16 gezeigt. Bevor diese zu einer solchen Beschichtungskabine 10 gelangen, werden sie in nicht eigens gezeigten Vorbehandlungsstationen z.B. gereinigt und entfettet.

Die Beschichtungskabine 10 umfasst einen oben angeordneten Beschichtungstunnel 18, welcher von vertikalen Seitenwänden 20 und einer horizontalen Kabinendecke 22 begrenzt, jedoch an den Stirnseiten offen ist. Darüber hinaus ist der Lackiertunnel 18 nach unten hin in der Weise offen, dass mit Overspray beladene Kabinenabluft nach unten strömen kann. Die Kabinendecke 22 ist in üblicher Weise eine untere Begrenzung eines Luftzuführraumes 24 und als Filterdecke 26 ausgebildet.

Die Fahrzeugkarosserien 16 werden mit einem im Beschichtungstunnel 18 untergebrachten und an und für sich bekannten Fördersystem 28 von der Eingangsseite des Beschichtungstunnels 18 zu dessen Ausgangsseite transportiert. Im Inneren des Beschichtungstunnels 18 befinden sich Applikationseinrichtungen 30 in Form von mehrachsigen Applikationsrobotern 32, wie sie ebenfalls an und für sich bekannt sind. Mittels der Applikationsroboter 32 können die Fahrzeugkarosserien 16 mit dem entsprechenden Material beschichtet werden.

Nach unten hin ist der Beschichtungstunnel 18 über einen begehbaren Gitterrost 34 zu einem darunter angeordneten Anlagenbereich 36 hin offen, in welchem von der Kabinenluft mitgeführten Overspraypartikel von der Kabinenluft getrennt werden.

Aus dem Luftzuführraum 24 strömt während des Beschichtungsvorgangs Luft nach unten durch den Beschichtungstunnel 18 hindurch zu dem Anlagenbereich 36, wobei die Luft im Beschichtungstunnel 18 vorhandenen Lack-Overspray aufnimmt und mit sich führt.

Diese mit Overspray beladene Luft wird mit Hilfe einer Luftleiteinrichtung 38 zu einer Abscheidevorrichtung in Form von einem oder mehreren Einweg-Filtermodulen 40 geleitet, die nachfolgend lediglich als Filtermodule 40 bezeichnet werden.

Hierzu umfasst die Luftleiteinrichtung 38 beim vorliegenden Ausführungsbeispiel einen Leitkanal 42, welcher durch Leitbleche 44 gebildet ist, die sich von den Seitenwänden 20 nach innen und nach unten geneigt erstrecken. Der Leitkanal 36 mündet unten in mehrere Anschlusskanäle 46, die ihrerseits unten in einem Anschlussstutzen 48 enden.

Im Betrieb ist jedes Filtermodul 40 strömungstechnisch und lösbar mit der Luftleiteinrichtung 38 verbunden. Die Kabinenluft durchströmt in dem Filtermodul 40 eine Filtereinheit mit einer Filterstruktur, an der sich der Lack-Overspray abscheidet. Hierauf wird weiter unten nochmals eingegangen. Insgesamt ist jedes Filtermodul 40 als austauschbare Baueinheit ausgebildet.

Die nun weitgehend von Overspraypartikeln befreite Kabinenluft strömt aus den Filtermodulen 40 in einen Zwischenkanal 50, über den sie in einen Sammelströmungskanal 52 gelangt. Die Kabinenluft wird über den Sammelströmungskanal 52 einer weiteren Aufbereitung und Konditionierung zugeführt und im Anschluss daran in einem hier nicht eigens gezeigten Kreislauf wieder in den Luftzuführraum 24 geleitet, aus dem sie wieder von oben in den Beschichtungstunnel 18 einströmt.

Falls die Kabinenluft durch die vorhandenen Filtermodule 40 tatsächlich noch nicht ausreichend von Overspraypartikeln befreit ist, können den Filtermodulen 40 noch weitere Filterstufen nachgelagert sein, denen die Kabinenluft zugeführt wird und in denen beispielsweise auch elektrostatisch arbeitende Abscheider eingesetzt werden, wie sie an und für sich bekannt sind.

Jedes Filtermodul 46 ruht in seiner Betriebsstellung auf einer Waage 54 und ist mittels einer Verriegelungseinrichtung 56 in seiner Betriebsstellung arretiert.

Jedes Filtermodul 40 ist für die Aufnahme einer maximalen Lackmenge, d.h. für eine Grenzbeladung mit Overspray, ausgelegt, die von der Bauart des Filtermoduls 40 und den für dieses verwendeten Materialien abhängt. Die bereits aufgenommene Lackmenge kann über die Waage 54 überwacht werden. Alternativ kann die Grenzbeladung mittels einer Differenzdruckbestimmung ermittelt werden. Je größer die Beladung des Filtermoduls 40 ist, desto größer ist der durch das Filtermodul 40 aufgebaute Luftwiderstand.

Wenn ein Filtermodul 40 seine maximale Aufnahmekapazität erreicht, wird die Verriegelungseinrichtung 56 gelöst und das voll beladene Filtermodul 46 aus dem unteren Anlagenbereich 40 der Beschichtungskabine 10 herausgefahren. Dies kann beispielsweise mit Hilfe eines Hubwagens 58 erfolgen, der von einem Werker 60 bedient wird. Hierzu kann der Bodenbereich des Filtermoduls 40 in seiner Geometrie und seinen Abmessungen als standardisierte Tragstruktur und beispielsweise nach Vorgabe einer so genannten Euro-Palette ausgebildet sein.

Zuvor wird die Strömungsverbindung des auszutauschenden Filtermoduls 40 mit der Luftleiteinrichtung 38 mittels nicht eigens gezeigter Sperrschieber verschlossen. Dieser Sperrschieber leitet die Kabinenluft zu den neben dem auszutauschenden Filtermodul 40 angeordneten Filtermodulen 40 um, die dessen Aufgabe solange übernehmen, bis der Austausch durchgeführt worden ist.

Dann wird ein leeres, d.h. nicht mit Overspray beladenes Filtermodul 40 in die Betriebsstellung geschoben, in der dieses strömungsdicht mit der Luftleiteinrichtung 38 verbunden ist, worauf die Verriegelungseinrichtung 56 wieder arretiert wird. Der Sperrschieber der Luftleiteinrichtung 38 wird wieder in eine Offenstellung gebracht, so dass das neu positionierte Filtermodul 40 von der Kabinenluft durchströmt wird.

Bei einer nicht eigens gezeigten Abwandlung kann der Austausch eines Filtermoduls 40 auch automatisiert oder zumindest halb automatisiert erfolgen. Hierzu kann vor den nebeneinander angeordneten Filtermodulen 40 eine Fördertechnik vorhanden sein, wie sie an und für sich bekannt ist, die welche die auszutauschenden Filtermodule 40 zu einer oder mehreren Entnahmestellen fördern können, wo sie von einem Werker 60 entnommen werden können. An einer oder mehreren Beladungsstellen kann dann ein leeres Filtermodul 40 an die Fördertechnik übergeben werden, welche dieses leere Filtermodul 40 dann an den Ort im Anlagenbereich 36 fördert, wo das volle Filtermodul 40 entnommen worden ist.

Wie eingangs erwähnt kann die Art des Beschichtungsmaterials, mit welchem die Gegenstände in der Beschichtungskabine 10 beschichtet werden, für verschiedene Gegenstände oder bei unterschiedlichen Prozessabläufen oder -phasen anders sein bzw. wechseln. Abhängig von dem applizierten Beschichtungsmaterial entstehen jedoch auch unterschiedliche Arten von Overspray.

Abhängig von der Art und den Eigenschaften des entstehenden Oversprays können auch die Anforderungen an verwendete Filtermodule unterschiedlich sein, um eine auf die jeweilige Art des Overspray abgestimmte und effektive Filterwirkung zu entfalten.

So kann abhängig von der Art und den Eigenschaften des entstehenden Overspray ein Filtermodul 40 für eine effektive Abscheidung des Overspray benötigt werden, das zum Beispiel als Abscheidefilter oder als Trägheitsfilter oder auch als eine Kombination davon ausgebildet ist.

Daher werden die Filtermodule 40 abhängig von der Art und den Eigenschaften des Oversprays aus einem Satz 62 von unterschiedlichen Einweg-Filtermodulen 64.X ausgewählt, wobei X als laufende Ziffer unterschiedliche Einweg-Filtermodule des Satzes 62 bezeichnen soll.

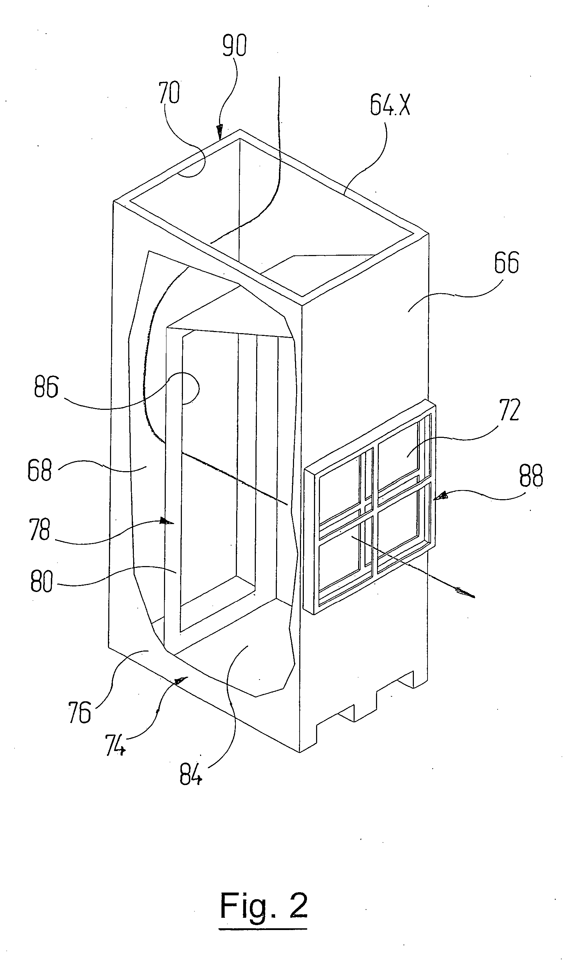

Anhand der Figuren 2 bis 13 werden nun unterschiedliche Filtermodule 64.1 bis 64.8 veranschaulicht. Die dort gezeigten Filtermodule 64.X stellen lediglich Beispiele für mögliche Varianten von unterschiedlichen Filtermodulen 64.X für verschiedene Arten von Overspray dar. Ein Satz 62 kann auch alternativ oder ergänzend anders aufgebauter Filtermodule 64.X oder auch weniger als die konkret erläuterten Filtermodule 64.X umfassen. Bei allen nachfolgend beschriebenen Filtermodule 64.X bezeichnen dieselben Bezugszeichen einander entsprechende Komponenten und Bauteile.

In Figur 2 ist zunächst der Grundaufbau der Filtermodule 64.X des Satzes 62 anhand eines Modulgehäuses 66 veranschaulicht, welches funktionsmäßig für verschiedene Filtermodule 64.X gleich ist. Das Modulgehäuse 66 begrenzt eine Strömungskammer 68, die sich zwischen einem Moduleinlass 70 und einem Modulauslass 72 erstreckt und von der Kabinenluft durchströmt wird.

Das Modulgehäuse 66 umfasst ein Bodenteil 74, welches beim vorliegenden Ausführungsbeispiel in seiner Geometrie und seinen Abmessungen als standardisierte Tragstruktur und beispielsweise nach Vorgabe einer oben bereits erwähnten Euro-Palette ausgebildet ist. Die Anordnung der Filtermodule 40 bzw. 64.X in dem Anlagenbereich 36 der Beschichtungskabine 10 kann dementsprechend nach einem Raster erfolgen, welchen auf dem verwendeten standardisierten Bodenteil 74 beruht.

Zumindest ein unterer Sammelbereich des Filtermoduls 64.X ist flüssigkeitsdicht und auf diese Weise als Sammelwanne 76 für Beschichtungsmaterial ausgebildet, das sich in dem Filtermodul 64.X abscheidet und nach unten abfließt.

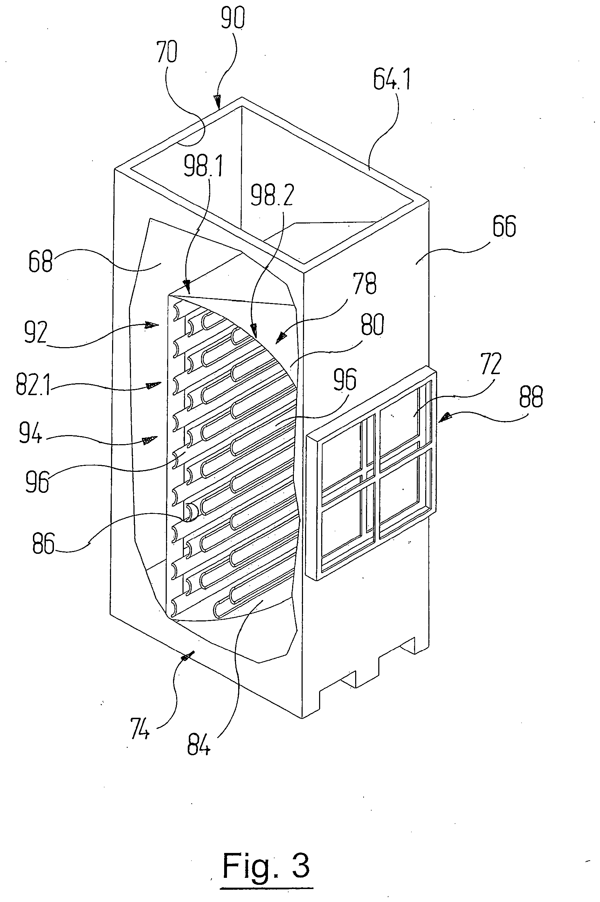

In der Strömungskammer 68 ist eine oben bereits angesprochene Filtereinheit 78 angeordnet, welche ein Filtergehäuse 80 für verschiedene Filterstrukturen 82.X umfasst, wobei X wieder als laufende Ziffer unterschiedliche Filterstrukturen 82.X kennzeichnen soll, die für unterschiedliche Arten von Overspray eingesetzt werden. Voneinander verschiedene Filterstrukturen 82.1 bis 82.8 sind in den Figuren 3 bis 11 zu erkennen.

Die Filterstrukturen 82.X sind in einem Filterraum 84 angeordnet, in welchen die mit Overspray beladene Kabinenluft durch einen Strömungseingang 86 des Filtergehäuses 80 einströmen kann und welcher zu dem Modulauslass 72 des Filtermoduls 64.X führt.

Der Modulauslass 72 ist beim vorliegenden Ausführungsbeispiel für alle Filtermodule 64.X des Satzes 62 einheitlich baugleich als Auslassstutzen 88 ausgebildet, der für eine strömungsdichte Verbindung mit dem Zwischenkanal 50 der Beschichtungskabine 10 ausgebildet ist. Allgemein ausgedrückt haben die Modulgehäuse 66 der verschiedenen Filtermodule 64.X anschlussgleiche Modulauslässe 72.

Der Moduleinlass 70 ist beim vorliegenden Ausführungsbeispiel für alle Filtermodule 64.X des Satzes 62 einheitlich baugleich als Einlassstutzen 90 ausgebildet, der für eine strömungsdichte Verbindung mit dem Anschlussstutzen 48 der Luftleiteinrichtung 38 ausgebildet ist. Allgemein ausgedrückt haben die Modulgehäuse 66 der verschiedenen Filtermodule 64.X also anschlussgleiche Moduleinlässe 70.

Die Kabinenluft strömt beim in Figur 2 veranschaulichten Filtermodul 64.X von oben in die Strömungskammer 68 ein und wird dort um 90° durch den Strömungseingang 86 der Filtereinheit 78 geführt, durchströmt deren Filterraum 84 mit der Filterstruktur 82.X und verlässt diesen zur Seite durch den Modulauslass 72. Dies ist durch einen Pfeil veranschaulicht, der kein eigenes Bezugzeichen trägt.

Figur 3 zeigt nun ein Filtermodul 64.1 des Satzes 62 mit einer Filterstruktur 82.1 einer ersten Bauart. Die Filtereinheit 78 mit der Filterstruktur 82.1 ist als Trägheitsfilter 92 konzipiert und umfasst als Filtermedium hierzu eine Vielzahl von Filterelementen 94 in Form von horizontal und quer zur Strömungsrichtung der Kabinenluft angeordneten Filterlamellen 96, von denen der Übersichtlichkeit halber nur einige mit einem Bezugszeichen versehen sind. Die Filterlamellen 96 können auch mit einer leichten Neigung nach unten verlaufen, so dass abgeschiedener Overspray zu und von einem Ende der Filterlamellen ablaufen bzw. nach unten abtropfen kann.

Die Filterlamellen 96 sind bei den vorliegenden Ausführungsbeispielen im Querschnitt bogenförmig. Andere Querschnittformen wie zum Beispiel V-förmige Querschnitte sind jedoch ebenfalls möglich. Die Filtereinheit 78 definiert in Strömungsrichtung hintereinander angeordnete Filterstufen 98.1 und 98.2. In der ersten Filterstufe 98.1 sind die Filterlamellen 96 in zwei vertikalen Ebenen und zueinander versetzt angeordnet, wobei die offene Seite des Bogens der Filterlamellen 96 entgegen der Strömungsrichtung der Kabinenluft, d.h. in die von dem Modulauslass 72 abliegende Richtung, weist. In der zweiten Filterstufe 98.2 sind die Filterlamellen 96 in mehreren vertikalen Ebenen hintereinander, jedoch nicht versetzt zueinander angeordnet. Zudem weist die offene Seite des Bogens der Filterlamellen 96 dort in die Strömungsrichtung der Kabinenluft, d.h. in Richtung auf den Modulauslass 72.

Auf diese Weise ist in Strömungsrichtung in dem Filtermodul 64.1 ein von der Kabinenluft durchströmtes Strömungslabyrinth ausgebildet, in dem die Overspraypartikel sich in an und für sich bekannter Weise nach dem Prinzip der Massenträgheit an den Filterlamellen 96 abscheiden. Von dort fließt der Overspray nach unten in die Sammelwanne 76, wo sich der Overspray zu einem Lacksumpf ansammelt. Ganz allgemein ausgedrückt sind also die Filterelemente 94 derart angeordnet, dass zwischen den Filterelementen 94 ein Strömungslabyrinth ausgebildet ist.

Ein derartiges Labyrinth-Filtermodul 64.1 ist grundsätzlich zum Abscheiden von allen Lackarten wie von Lösemittel-Lacken, wasserverdünnbaren Lacken sowie 2- oder MehrKomponenten-Lacken geeignet. Es bietet eine gute Abscheideleistung bei einem verhältnismäßig großen und offenen Strömungsquerschnitt.

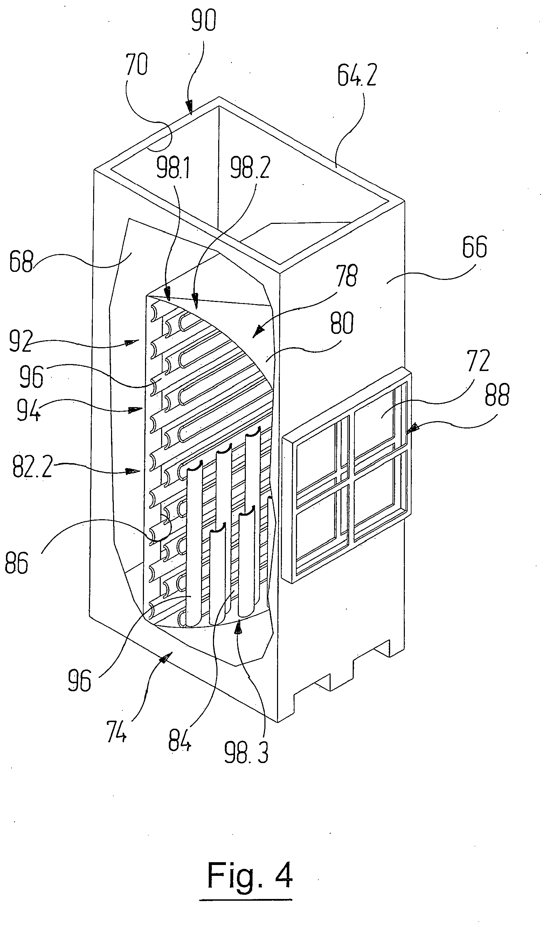

Figur 4 zeigt ein abgewandeltes Labyrinth-Filtermodul 64.2 des Satzes 62 mit einer Filtereinheit 78 und einer Filterstruktur 82.2, die drei Filterstufen 98.1, 98.2 und 98.3 definieren. Auch die Filtereinheit 78 mit der Filterstruktur 82.2 ist als Trägheitsfilter 92 konzipiert. Die erste Filterstufe 98.1 entspricht der ersten Filterstufe 98.1 des Filtermoduls 64.1 nach Figur 3. In der zweiten Filterstufe 98.2 des Filtermoduls 64.2 befindet sich eine Ebene mit Filterlamellen 96, deren offene Seite des Bogens in Richtung auf den Modulauslass 72 weist. In der dritten Filterstufe 98.3 sind nun mehrere vertikal ausgerichtete Filterlamellen 96 mit bogenförmigem Querschnitt angeordnet, welche sich jeweils nur im unteren Bereich der Filtereinheit 78 erstrecken und deren offene Seite des Bogens der einströmenden Kabinenluft entgegen weist. Diese vertikalen Filterlamellen 96 sind in Ebenen hintereinander und versetzt zueinander angeordnet.

Ein derartiges Labyrinth-Filtermodul 64.2 ist grundsätzlich zum Abscheiden von allen Lackarten wie von Lösemittel-Lacken, wasserverdünnbaren Lacken sowie 2- oder MehrKomponenten-Lacken geeignet. Insbesondere die hier vorhandenen vertikalen Filterlamellen 96 tragen besonders effizient zum Abscheiden von fließfähigen Lacken mit längerer Aushärtzeit bei, wie es beispielsweise bei 2-Komponenten-Lacken der Fall sein kann.

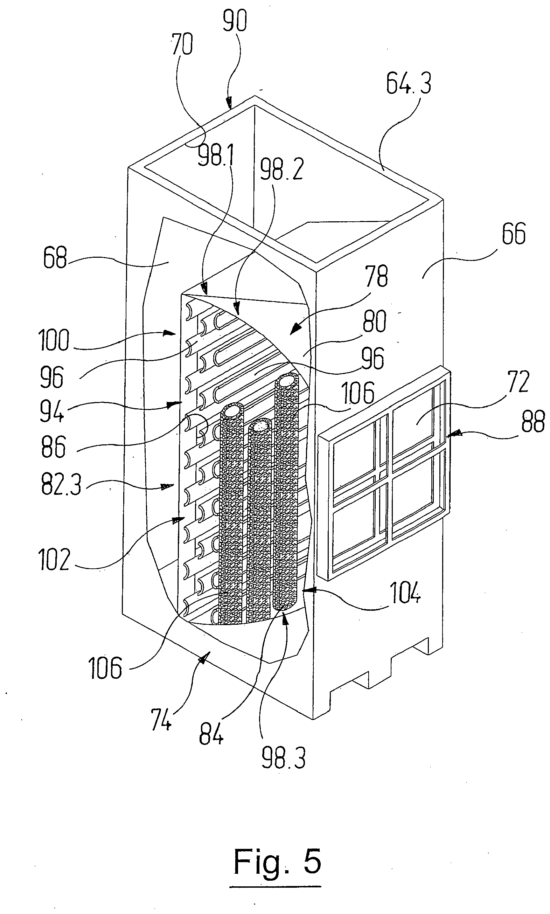

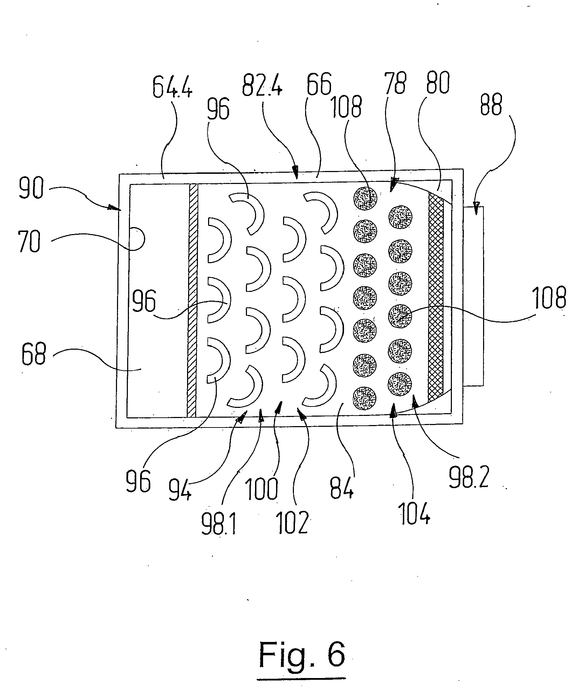

Figur 5 zeigt ein Filtermodul 64.3 des Satzes 62, welches die Eigenschaften eines Trägheitsfilters mit den Eigenschaften eines Abscheidefilters vereint. Die Filtereinheit 78 und die dortige Filterstruktur 82.3 definieren ebenfalls drei Filterstufen 98.1, 98.2 und 98.3. Die Filtereinheit 78 mit der Filterstruktur 82.3 ist als Kombinationsfilter 100 mit einem Trägheitsteil 102 und einem Abscheideteil 104 konzipiert. Die erste Filterstufe 98.1 und die zweite Filterstufe 98.2 entsprechen der ersten Filterstufe 98.1 und der zweiten Filterstufe 98.2 des Filtermoduls 64.2 nach Figur 4 und bilden den Trägheitsteil 102. In der dritten Filterstufe 98.3 des Filtermoduls 64.3 sind als Filterelemente 94 im Abscheideteil 104 hier mehrere vertikal ausgerichtete Filterhohlröhren 106 angeordnet, die beispielsweise aus einem Vliesmaterial gebildet sein können. Statt der Filterhohlröhren 106 können als Filterelemente 94 alternativ oder ergänzend auch Filterstäbe 108 (vgl. Figur 6) vorgesehen sein.

Ein derartiges Kombinations-Filtermodul 64.3 ist grundsätzlich zum Abscheiden von allen Lackarten wie von Lösemittel-Lacken, wasserverdünnbaren Lacken sowie 2- oder MehrKomponenten-Lacken geeignet. Vor allem für schnell austrocknende Lacke mit insbesondere geringen Partikelgrößen von z.B. kleiner 25 um kann ein solches Kombinations-Filtermodul 64.3 verwendet werden.

Figur 6 zeigt in einer Draufsicht ein ähnlich konzipiertes Filtermodul 64.4 des Satzes 62 mit einer Filtereinheit 78 und einer Filterstruktur 82.4, die jedoch wieder lediglich zwei Filterstufen 98.1, 98.2 definieren. Auch die Filtereinheit 78 mit der Filterstruktur 82.4 ist als Kombinationsfilter 100 mit einer Trägheitsteil 102 und einem Abscheideteil 104 ausgebildet. In der ersten Filterstufe 98.1 sind hier nun vertikal verlaufende Filterlamellen 96 mit bogenförmigem Querschnitt vorgesehen, die in Strömungsrichtung in vier Ebenen hintereinander und versetzt zueinander angeordnet sind.

Die offene Seite des Bogens der Filterlamellen 96 ist jeweils der einströmenden Kabinenluft entgegengerichtet. Die Filterlamellen 96 bilden den Trägheitsteil 102. In der zweiten Filterstufe 98.2, die hier zugleich den Abscheideteil 104 bildet, sind als Filterelemente 94 vertikal verlaufende Filterstäbe 108 angeordnet, die beispielsweise aus einem Vliesmaterial gebildet sein können. Es sind in Strömungsrichtung zwei Lagen Filterstäbe 108 vorgesehen, die versetzt zueinander angeordnet sind. Statt der Filterstäbe 108 können alternativ oder ergänzend auch Filterhohlröhren 106 vorgesehen sein.

Ein derartiges Kombinations-Filtermodul 64.4 ist grundsätzlich zum Abscheiden von allen Lackarten wie von Lösemittel-Lacken, wasserverdünnbaren Lacken sowie 2- oder MehrKomponenten-Lacken geeignet. Besonders effektiv ist ein solches Kombinationsfilter 64.4 für Klarlacke, die wieder als 2-Komponenten-Lacke vorliegen können. Das Kombinations-Filtermodul 64.4 mit den vertikalen Filterlamellen 96 bietet insbesondere eine große Aufnahmekapazität.

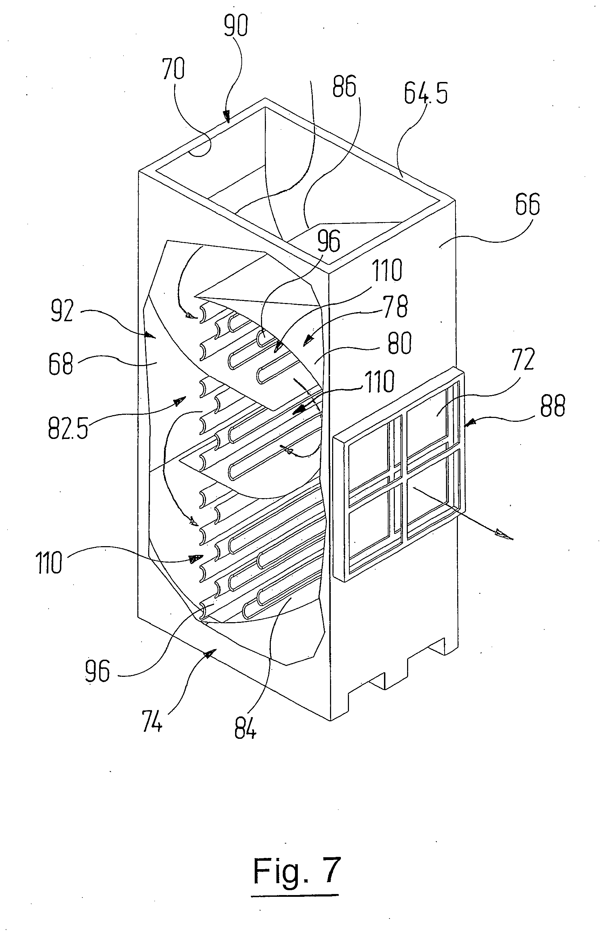

Figur 7 zeigt ein Filtermodul 64.5, in dem die Kabinenluft auf einem mäanderförmigen Strömungsweg durch die Filtereinheit 78 geführt wird, was durch entsprechende Pfeile veranschaulicht ist. Das ebenfalls als.Trägheitsfilter 92 konzipierte Filtermodul 64.5 umfasst als Filterstruktur 82.5 eine Vielzahl von horizontal und quer zur Strömungsrichtung der Kabinenluft angeordneten Filterlamellen 96 mit bogenförmigem Querschnitt, die in Mäanderabschnitten 110 angeordnet sind. Dabei sind die Filterlamellen 96 so ausgerichtet, dass die Kabinenluft in jedem Mäanderabschnitt 110 zunächst auf Filterlamellen 96 trifft, die mit der offenen Seite des Bogens entgegen der Strömungsrichtung weisen. Stromab dieser Filterlamellen 96 sind in jedem Mäanderabschnitt 110 noch weitere Filterlamellen 96 angeordnet, deren offene Seite des Bogens in Strömungsrichtung weist.

Ein derartiges Mäander-Filtermodul 64.5 ist grundsätzlich zum Abscheiden von allen Lackarten wie von Lösemittel-Lacken, wasserverdünnbaren Lacken sowie 2- oder MehrKomponenten-Lacken geeignet. Besonders wirksam ist das Mäander-Filtermodul 64.5 für verhältnismäßig trockene Lacke, da ein Teil der Partikel solcher Lacke relativ weit durch das Mäander-Filtermodul 64.5 mitströmt, bis es zu einer Abscheidung kommt. So kann der Strömungsweg im Filtermodul 64.5 effektiv genutzt werden.

Statt der Filterlamellen 96, der Filterhohlröhren 106 oder der Filterstäbe 108 können als Filterelemente 94 auch Fachstrukturen oder Kammerstrukturen vorgesehen sein. Als Fachstrukturen können beispielsweise falt- oder steckbar miteinander verbundene Lamellen oder Platten dienen. Kammerstrukturen werden in der Praxis nach Art von Waben aufgebaut.

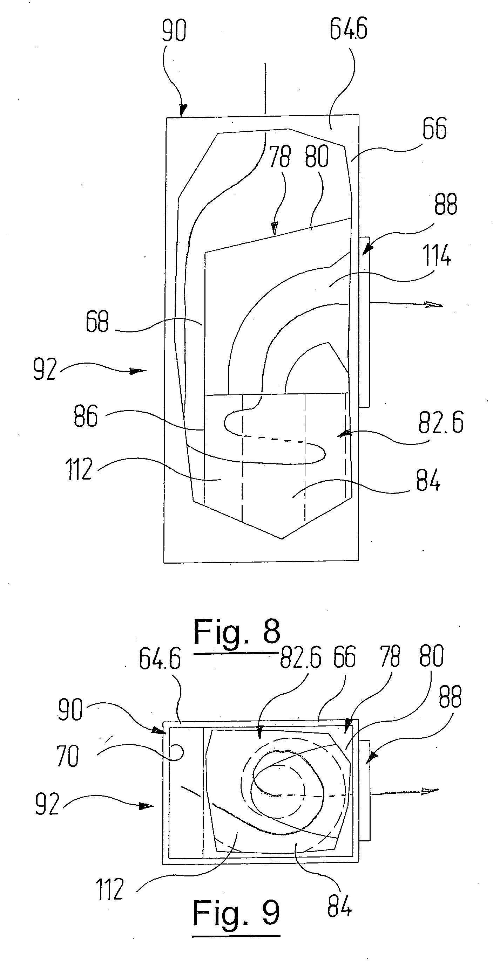

Die Figuren 8 und 9 zeigen ein Filtermodul 64.6, welche als Trägheitsfilter 92 arbeitet. Die Filtereinheit 78 umfasst als Filterstruktur 82.6 ein Vertikalzyklon 112, in welcher die Kabinenluft in einem schraubenförmigen Strömungsweg geführt wird. Die Filtereinheit 78 ist dort so ausgebildet, dass die Kabinenluft in einer Aufwärtsschraube durch die den Vertikalzyklon 112 zu einem Abgabekanal 114 gelangt, der zum Modulauslass 72 führt.

Ein derartiges Vertikalzyklon-Filtermodul 64.6 ist grundsätzlich zum Abscheiden von allen Lackarten wie von Lösemittel-Lacken, wasserverdünnbaren Lacken sowie 2- oder MehrKomponenten-Lacken geeignet. Ein gutes Abfließen des abgeschiedenen Lackfilms wird hier insbesondere bei der Aufnahme von 2- oder Mehrkomponenten-Lacken erreicht.

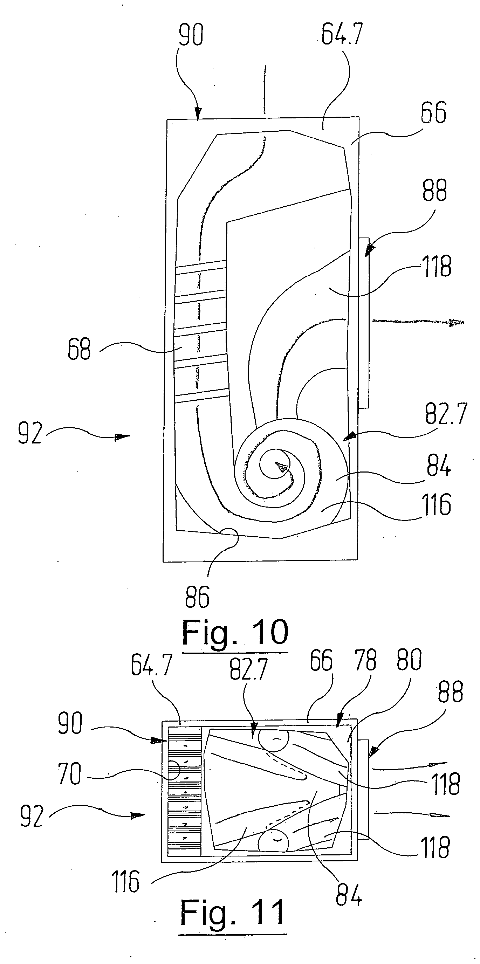

Die Figuren 10 und 11 zeigen ein Filtermodul 64.7, welches als Trägheitsfilter 92 ebenfalls das Zyklonprinzip nutzt. Hier umfasst die Filtereinheit 78 als Filterstruktur 82.7 ein Horizontalzyklon 116, in welcher die Kabinenluft in horizontaler Richtung in einem schraubenförmigen Strömungsweg geführt wird. Der Horizontalzyklon 116 mündet zu beiden Seiten in Abgabekanäle 118, die ihrerseits wieder zu dem Modulauslass 72 führen.

Ein derartiges Horizontalzyklon-Filtermodul 64.7 ist grundsätzlich zum Abscheiden von allen Lackarten wie von Lösemittel-Lacken, wasserverdünnbaren Lacken sowie 2- oder MehrKomponenten-Lacken geeignet. Vor allem Lösemittel-Lacke und wasserverdünnbare Lacke werden mit Hilfe eines solchen Filtermoduls 64.7 effektiv aus der Kabinenluft abgeschieden.

Die Zyklone 112 und 116 können auch in einem Filtermodul 64.X mit Filterelementen 94 kombiniert werden, die ihrerseits wieder strömungsdurchlässig oder -undurchlässig sein können. Allgemein kann der Trägheitsfilter 92 und/oder der Trägheitsteil 102 eines jeweiligen Filtermoduls 64.X als Zyklon ausgebildet sein.

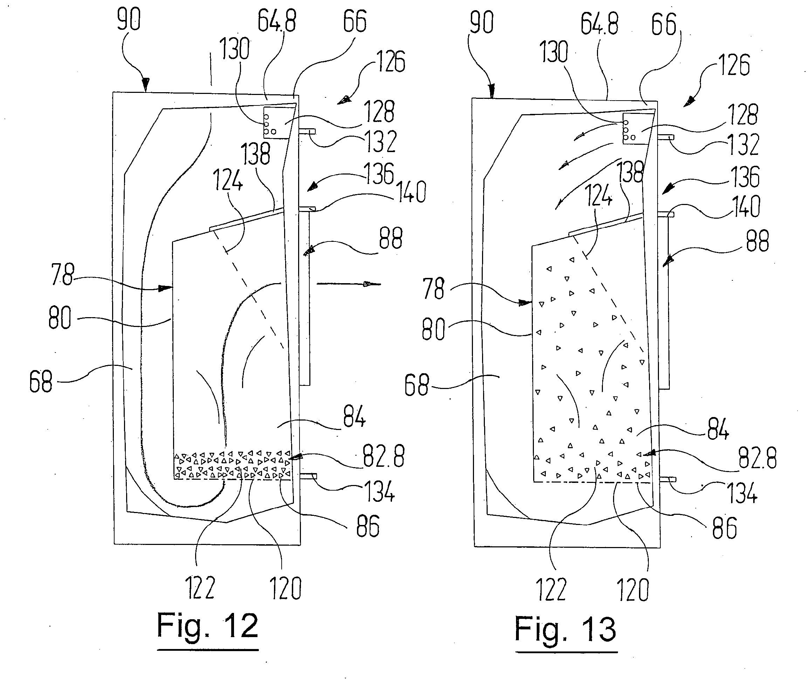

Die Figuren 12 und 13 zeigen als Beispiel für einen Abscheidefilter ein Filtermodul 64.8, bei dem die Filtereinheit 78 von unten nach oben von der Kabinenluft durchströmt wird, wie es wieder ein entsprechender Pfeil veranschaulicht. Hierzu ist der Strömungseingang 86 der Filtereinheit 78 als strömungsdurchlässiger Boden 120 des Filtergehäuses 80 ausgebildet, der vom Boden des Modulgehäuses 66 beabstandet ist.

Das Filtergehäuse 80 der Filtereinheit 78 ist mit einer Filterstruktur 82.8 in Form eines Filtergranulats 122 befüllt, welches von der zu reinigenden Kabinenluft durchströmt wird. Das Filtergranulat 122 kann beispielsweise auch aus aufbereiteten Filtermodulen 64.X hergestellt sein. Vor dem Modulauslass 72 befindet sich im Filtergehäuse 80 eine Filterdecke 124, so dass möglicherweise durch die strömende Kabinenluft aufgewirbeltes Filtergranulat 122 nicht aus dem Filtermodul 64.8 entweichen kann.

Das Filtermodul 64.8 umfasst zusätzlich eine Aufbereitungseinrichtung 126. Mit Hilfe der Aufbereitungseinrichtung 126 kann das mit Overspray beladene Filtermedium, d.h. beim vorliegenden Ausführungsbeispiel das Filtergranulat 122, behandelt werden. Die Aufbereitungseinrichtung 126 umfasst im vorliegenden Fall ein Reservoir 128, in dem sich ein Behandlungsmaterial 130 befindet und welches über einen Anschluss 132 mit Druckluft beaufschlagt werden kann. In diesem Fall wird das Behandlungsmaterial 130 aus dem Reservoir 122 in die Strömungskammer 68 des Filtermoduls 64.8 abgegeben.

Bei dem Behandlungsmaterial 130 kann es sich beispielsweise um Geruchshemmer, z.B. um Aktivkohle, handeln, die einer Geruchsbildung bei der Lagerung der mit Overspray beladenen Filtermodule 64.8 entgegenwirken.

Das Behandlungsmaterial 130 kann in die Strömungskammer 68 abgegeben werden, nachdem das Filtermodul 64.8 seine Grenzbeladung mit Overspray erreicht hat und von der Leiteinrichtung 38 der Beschichtungskabine 10 entfernt wurde.

Damit sich das Behandlungsmaterial 130 gut in dem Filtergranulat 122 verteilten kann, ist ein weiterer Druckluftanschluss 134 vorhanden, der am Boden 120 der Filtereinheit 78 angeordnet ist.

Auf diesem Wege kann zusätzlich Druckluft in die Filtereinheit 78 und auf das mit Overspray beladene Filtergranulat 122 gegeben werden, so dass dieses im Filtergehäuse 80 der Filtereinheit 78 aufgewirbelt wird; dies ist in Figur 13 veranschaulicht. Gleichzeitig wird das Behandlungsmaterial 130 durch die Druckluft aus dem Anschluss 132 durch die Strömungskammer 68 zur Filtereinheit 78 und in diese hinein getrieben, wobei es auf dem Weg dorthin die Wände und daran haftenden Overspray benetzen kann.

Im laufenden Betrieb des Filtermoduls 64.8 mit dem Filtergranulat 122 kann es dazu kommen, dass sich dieses an der Filterdecke 124 im Filtergehäuse 80 der Filtereinheit 78 niederschlägt und so im Laufe der Zeit verstopft. In diesem Fall müsste das Filtermodul 64.8 ausgetauscht werden, obwohl seine Grenzbeladung noch nicht erreicht ist.

Um dies zu vermeiden, umfasst das Filtermodul 64.8 eine Reinigungseinrichtung 136, mittels welcher von Zeit zu Zeit Filtergranulat 122 von der Filterdecke 124 entfernt werden kann.

Beim vorliegenden Ausführungsbeispiel umfasst die Reinigungseinrichtung 136 hierfür ein Düsenrohr 138, welches von einem Druckluftanschluss 140 zur Filterdecke 124 führt, so dass an der Filterdecke 124 haftendes Filtergranulat 122 abgeblasen werden kann.

Ein derartiges Abscheide-Filtermodul 64.8 - auch ohne Aufbereitungseinrichtung 126 und/oder ohne Reinigungseinrichtung 136 - ist grundsätzlich zum Abscheiden von allen Lackarten wie von Lösemittel-Lacken, wasserverdünnbaren Lacken sowie 2- oder Mehr-Komponenten-Lacken geeignet. Besonders effektiv haben sich solche Abscheide-Filtermodule 64.8 für Lacke erwiesen, die noch eine Oberflächenaktivität haben und insbesondere noch klebrig sind.

Die Filtermodule 64.X können jeweils insgesamt, einschließlich der jeweiligen Filtereinheit 78, aus einem nassfesten Recyclingmaterial gefertigt sein. Allgemein ausgedrückt können eine Komponente, mehrere Komponenten oder alle Komponenten der Filtermodule 64.X aus einem nassfesten Recyclingmaterial gefertigt sein. Hierfür kommen beispielsweise Cellulosematerialien wie gegebenenfalls behandelte Papier- und Pappmaterialien, Wellkarton, Kartone mit stehender Welle, Kartone mit Wabenstruktur oder Wickelkartone, aber auch anderer Materialien wie z.B. MDF-Materialien in Frage. Auch Kunststoffe wie insbesondere Polyethylen oder Polypropylen kommen in Frage.

Die Filterelemente 94 und konkret die oben erläuterten Varianten in Form von Filterlamellen 96, Filterhohlröhren 106 und Filterstäben 108 können auch aus anderen als den gerade genannten Materialien gefertigt sein, die ihrerseits wieder ein jeweiliges Filtermodul 64.X für eine bestimmte Art von Overspray mit bestimmten Eigenschaften qualifizieren.

Bei allen oben erläuterten Filtermodulen 64.X, bei denen die Filterstruktur 82.X Filterelemente 94 umfasst, können diese aus einem für die Kabinenluft undurchlässigen oder durchlässigen Abscheidematerial gefertigt sein. In letzterem Fall kann das jeweilige Filtermodul 64.X zunächst als klassisches Abscheidefilter arbeiten, jedoch nach dem Prinzip eines Trägheitsfilters wirken, wenn die Filterelemente durch Overspray verschlossen sind.

Beispielsweise können die Filterelemente 94 unter Verwendung von Fiberglas, Polyestern, von mit Kunststoff beschichtetem Papier, von Styropor oder Baumwolle oder Kombinationen hiervon hergestellt sein, ohne dass diese Aufzählung abschließend ist. Das verwendete Material kann auf die Art und die Eigenschaften des zu reinigenden Oversprays abgestimmt sein.

Dabei können die Filtermodule 64.X selbst als modularer Bausatz in Einzelteilen geliefert werden und am Ort der Oberflächenbehandlungsanlage 12 zusammengebaut werden. Beispielsweise können die Filtermodule 64.X auch so konzipiert sein, dass sie aus einer zusammengefalteten Konfiguration entfaltet werden können. Ein Filtermodul-Bausatz hat ein Volumen, das beträchtlich kleiner sein kann als das Volumen der entfalteten oder aufgebauten Filtermodule 64.X.

## Patentansprüche

1. Verfahren zum Betreiben einer Oberflächenbehandlungsanlage (12), bei welchem Overspray, der in einer Beschichtungskabine (10) entsteht, von einem Luftstrom aufgenommen und zu einem oder mehreren Einweg-Filtermodulen (40) geführt wird, in denen Overspray abgeschieden wird, wobei ein Einweg-Filtermodul nach Erreichen einer Grenzbeladung mit Overspray gegen ein leeres Einweg-Filtermodul ausgetauscht wird,
**dadurch gekennzeichnet, dass**
das eine oder die mehreren Einweg-Filtermodule (40) abhängig von der Art und den Eigenschaften des Oversprays aus einem Satz (62) von unterschiedlichen Einweg-Filtermodulen (64.X) ausgewählt werden,
wobei ein Satz (62) von unterschiedlichen Einweg-Filtermodulen (64.X) verwendet wird, der
a) verschiedene Filtermodule (64.X) umfasst, die als austauschbare Einweg-Baueinheiten mit einem Modulgehäuse (66) und einer Filtereinheit (78) ausgebildet sind und durch welche mit Overspray beladene Kabinenluft leitbar ist;
und bei dem
b) die Modulgehäuse (66) der verschiedenen Filtermodule (64.X) anschlussgleiche Moduleinlässe (70, 90) haben;
c) die Modulgehäuse (66) der verschiedenen Filtermodule (64.X) anschlussgleiche Modulauslässe (72, 88) haben;
d) zumindest die Filtereinheiten (78) von zwei verschiedenen Filtermodulen (64.X) unterschiedlich ausgebildet sind.

2. Verfahren nach Anspruch 1, **dadurch gekennzeichnet, dass** die rheologischen Eigenschaften des Oversprays und/oder die Partikelgrößenverteilung des Oversprays bei der Auswahl des Einweg-Filtermoduls (64.X) berücksichtigt werden.

3. Verfahren nach Anspruch 1 oder 2, **dadurch gekennzeichnet, dass** der Satz (62) wenigstens ein Filtermodul (64.X) umfasst, welches als Abscheidefilter ausgebildet ist.

4. Verfahren nach einem der Ansprüche 1 bis 3, **dadurch gekennzeichnet, dass** der Satz (62) wenigstens ein Filtermodul (64.X) umfasst, welches als Trägheitsfilter (92) ausgebildet ist.

5. Verfahren nach einem der Ansprüche 1 bis 4, **dadurch gekennzeichnet, dass** der Satz (62) wenigstens ein Filtermodul (64.X) umfasst, welches als Kombinationsfilter (100) mit einem Trägheitsteil (102) und einem Abscheideteil (104) ausgebildet ist.

6. Verfahren nach Anspruch 4 oder 5, **dadurch gekennzeichnet, dass** der Trägheitsfilter (92) und/oder der Trägheitsteil (102) eines jeweiligen Filtermoduls (64.X) als Zyklon (112; 116) ausgebildet ist.

7. Verfahren nach einem der Ansprüche 1 bis 6, **dadurch gekennzeichnet, dass** der Satz (62) wenigstens ein Filtermodul (64.X) mit einer Vielzahl von Filterelementen (94) umfasst, die derart angeordnet sind, dass zwischen den Filterelementen (94) ein Strömungslabyrinth ausgebildet ist.

8. Verfahren nach Anspruch 7, **dadurch gekennzeichnet, dass** der Satz (62) wenigstens ein Filtermodul (64.X) umfasst, bei welchem als Filterelemente (94) Filterlamellen (96), Filterhohlröhren (106), Filterstäbe (108), Fachstrukturen oder Kammerstrukturen vorhanden sind.

9. Verfahren nach Anspruch 8, **dadurch gekennzeichnet, dass** die Filterelemente (94) als Filterlamellen (96) mit einem bogenförmigen oder V-förmigen Querschnitt ausgebildet sind.

10. Verfahren nach einem der Ansprüche 1 bis 9, **dadurch gekennzeichnet, dass** der Satz (62) wenigstens ein Filtermodul (64.X) umfasst, bei dem mehrere Filterstufen (98.1, 98.2, 98.3) vorhanden sind, die in Strömungsrichtung der Kabinenluft aufeinander folgen.

## Claims

1. Method for operating a surface treatment installation (12), in which overspray arising in a coating booth (10) is taken up by an air stream and carried to one or more disposable filter modules (40) in which overspray is deposited, wherein, once a limit loading with overspray is reached, a disposable filter module is exchanged for an empty disposable filter module,
**characterised in that**
the one or more disposable filter modules (40) is/are selected from a set (62) of different disposable filter modules (64.X) depending on the nature and characteristics of the overspray,
wherein a set (62) of different disposable filter modules (64.X) is used which
a) comprises various filter modules (64.X), which are formed as exchangeable disposable units with a module housing (66) and a filter unit (78) and through which booth air laden with overspray can be conducted;
and in which
b) the module housings (66) of the various filter modules (64.X) have same-connection module inlets (70, 90);
c) the module housings (66) of the various filter modules (64.X) have same-connection module outlets (72, 88);
d) at least the filter units (78) of two different filter modules (64.X) are formed differently.

2. Method according to claim 1, **characterized in that** the rheological properties of the overspray and/or the particle size distribution of the overspray are taken into account in the selection of the disposable filter module (64.X).

3. Method according to claim 1 or 2, **characterised in that** the set (62) comprises at least one filter module (64.X) that is formed as a separation filter.

4. Method according to one of claims 1 to 3, **characterised in that** the set (62) comprises at least one filter module (64.X) that is formed as an inertial filter (92).

5. Method according to one of claims 1 to 4, **characterised in that** the set (62) comprises at least one filter module (64.X) that is formed as a combination filter (100) with an inertial part (102) and a separation part (104).

6. Method according to claim 4 or 5, **characterised in that** the inertial filter (92) and/or the inertial part (102) of a respective filter module (64.X) is formed as a cyclone (112; 116).

7. Method according to one of claims 1 to 6, **characterised in that** the set (62) comprises at least one filter module (64.X) with a plurality of filter elements (94), which are arranged in such a way that a flow labyrinth is formed between the filter elements (94).

8. Method according to claim 7, **characterised in that** the set (62) comprises at least one filter module (64.X) in which filter lamellae (96), filter hollow tubes (106), filter rods (108), compartment structures or chamber structures are present as filter elements (94).

9. Method according to claim 8, **characterised in that** the filter elements (94) are formed as filter lamellae (96) with a curved or V-shaped cross section.

10. Method according to one of claims 1 to 9, **characterised in that** the set (62) comprises at least one filter module (64.X) in which a plurality of filter stages (98.1, 98.2, 98.3) is present, which follow one another in the flow direction of the booth air.

## Revendications

1. Procédé d'exploitation d'une installation de traitement de surface (12), lors duquel de la surpulvérisation qui apparaît dans une cabine d'enduction (10) est reçue par un courant d'air et guidée vers un ou plusieurs modules de filtre à voie unique (40), dans lesquels de la surpulvérisation est séparée, dans lequel un module de filtre à voie unique est échangé par un module de filtre à voie unique vide après atteinte d'un chargement limite en surpulvérisation,
**caractérisé en ce que**
le ou les modules de filtre à voie unique (40) sont sélectionnés en fonction du type et des propriétés de la surpulvérisation parmi un ensemble (62) de différents modules de filtre à voie unique (64.X),
dans lequel un ensemble (62) de différents modules de filtre à voie unique (64.X) est utilisé, lequel
a) comprend différents modules de filtre (64.X) qui sont réalisés en tant qu'unités modulaires à voie unique échangeables avec un logement de module (66) et une unité de filtre (78) et à travers lesquels de l'air de cabine chargé en surpulvérisation peut être dirigé ;
et pour lequel
b) les logements de module (66) des différents modules de filtre (64.X) ont des entrées de module à raccord identique (70, 90) ;
c) les logements de module (66) des différents modules de filtre (64.X) ont des sorties de module à raccord identique (72, 88) ;
d) au moins les unités de filtre (78) de deux modules de filtre différents (64.X) sont réalisées différemment.

2. Procédé selon la revendication 1, **caractérisé en ce que** les propriétés rhéologiques de la surpulvérisation et/ou la distribution de taille particulaire de la surpulvérisation sont prises en compte lors de la sélection du module de filtre à voie unique (64.X).

3. Procédé selon la revendication 1 ou 2, **caractérisé en ce que** l'ensemble (62) comprend au moins un module de filtre (64.X) qui est réalisé en tant que filtre de séparation.

4. Procédé selon une des revendications 1 à 3, **caractérisé en ce que** l'ensemble (62) comprend au moins un module de filtre (64.X) qui est réalisé en tant que filtre par inertie (92).

5. Procédé selon une des revendications 1 à 4, **caractérisé en ce que** l'ensemble (62) comprend au moins un module de filtre (64.X) qui est réalisé en tant que filtre combiné (100) avec une partie par inertie (102) et une partie de séparation (104).

6. Procédé selon la revendication 4 ou 5, **caractérisé en ce que** le filtre par inertie (92) et/ou la partie par inertie (102) d'un module de filtre respectif (64.X) est réalisé(e) en tant que cyclone (112 ; 116).

7. Procédé selon une des revendications 1 à 6, **caractérisé en ce que** l'ensemble (62) comprend au moins un module de filtre (64.X) avec une pluralité d'éléments de filtre (94) qui sont disposés de telle sorte qu'un labyrinthe d'écoulement est réalisé entre les éléments de filtre (94).

8. Procédé selon la revendication 7, **caractérisé en ce que** l'ensemble (62) comprend au moins un module de filtre (64.X) pour lequel des lamelles de filtre (96), des tuyaux creux de filtre (106), des bâtons de filtre (108), des structures compartimentées ou des structures à chambre sont présents en tant qu'éléments de filtre (94).

9. Procédé selon la revendication 8, **caractérisé en ce que** les éléments de filtre (94) sont réalisés en tant que lamelles de filtre (96) avec une section transversale en forme d'arc ou en forme de V.

10. Procédé selon une des revendications 1 à 9, **caractérisé en ce que** l'ensemble (62) comprend au moins un module de filtre (64.X) pour lequel plusieurs étages de filtre (98.1, 98.2, 98.3) sont présents, lesquels se succèdent dans la direction d'écoulement de l'air de cabine.
